**Europäisches Patentamt**

**European Patent Office**

**Office européen des brevets**

(19)

(11) Veröffentlichungsnummer: **0 286 883**
**B1**

(12) # EUROPÄISCHE PATENTSCHRIFT

(45) Veröffentlichungstag der Patentschrift:
**10.01.90**

(51) Int. Cl.⁴: **F01D 25/16**

(21) Anmeldenummer: **88104707.0**

(22) Anmeldetag: **24.03.88**

(54) **Lagerung eines Abgasturboladers.**

(30) Priorität: **11.04.87 DE 3712444**

(43) Veröffentlichungstag der Anmeldung:
**19.10.88 Patentblatt 88/42**

(45) Bekanntmachung des Hinweises auf die Patenterteilung:
**10.01.90 Patentblatt 90/2**

(84) Benannte Vertragsstaaten:
**AT DE FR GB IT**

(56) Entgegenhaltungen:
**DE-A- 3 601 082**
**FR-A- 594 265**
**GB-A- 374 811**
**GB-A- 946 597**
**US-A- 1 421 918**
**US-A- 4 233 821**

(73) Patentinhaber: **A.G. Kühnle, Kopp & Kausch,**
**Postfach 265 Hessheimer Strasse 2,**
**D-6710 Frankenthal/Pfalz(DE)**

(72) Erfinder: **Münkel, Uwe, Dipl.-Ing.,**
**Lambsheimerstrasse 47, D-6710 Frankenthal(DE)**

(74) Vertreter: **Klose, Hans, Dipl.-Phys. et al,**
**Kurfürstenstrasse 32, D-6700 Ludwigshafen(DE)**

## Beschreibung

Die Erfindung betrifft eine Lagerung eines Abgasturboladers mit einer Hülse, die in einer Bohrung eines Lagergehäuses zur radialen Lagerung einer Welle schwimmend angeordnet und mittels im Lagergehäuse angeordneten Mitteln gegen Drehung gesichert ist, wobei die Hülse an ihren beiden axialen Endbereichen jeweils eine innere und eine äußere Lagerfläche aufweist und wobei axial zwischen den Endbereichen wenigstens zwei Durchbrechungen vorgesehen sind.

Aus der US-PS 38 11 741 ist eine Lagerung eines Abgasturboladers nachgewiesen, welche eine in einer Bohrung eines Lagergehäuses schwimmend angeordnete Hülse aufweist. Im Lagergehäuse ist ein Sicherungsstift befestigt, welcher in einer als radiale Bohrung ausgebildete Durchbrechung der Hülse in radialer Richtung eingreift. Die Hülse enthält weitere Durchbrechungen, durch welche den Lagerflächen zugeführtes Schmiermittel abströmen kann. Auch diese Durchbrechungen sind als Bohrungen ausgebildet und die Hülse weist insgesamt eine vergleichsweise große Masse auf. Der genannte Sicherungsstift liegt in der zugeordneten Bohrung der Hülse über eine relativ große Fläche auf, wodurch die freie Bewegbarkeit der Hülse nicht nur in der Drehrichtung sondern auch in anderen Freiheitsgraden nicht unwesentlich reduziert wird. Hierdurch ergeben sich Schwierigkeiten im Hinblick auf das Schwingungsverhalten ebenso wie auf die Funktionssicherheit und Lebensdauer für Drehzahlen über 150.000 Umdrehungen pro Minute. Derart hohe Drehzahlen werden vor allem für sogenannte kleine Abgasturbolader gefordert, welche für Motoren bis etwa 1,5 Liter, maximal bis 2 Liter zum Einsatz gelangen. Hinzu kommt, daß die Wellen derartiger Abgasturbolader im Hinblick auf die Reibungsverluste bei hohen Drehzahlen extrem dünn und damit biegeweich ausgebildet werden.

Aus der CA-PS 718 715 ist eine Lagerung für einen Abgasturbolader bekannt, deren Lagerhülse an einem axialen Ende Zähne aufweist. Mit dem Lagergehäuse ist eine Druckscheibe mit Zähnen verbunden, welche in die genannten Zähne der Lagerhülse zwecks Drehsicherung eingreifen. Die freie Bewegbarkeit der Lagerhülse ist darüberhinaus auch in anderen Freiheitsgraden zumindest eingeschränkt. So werden die beiden anderen rotatorischen Freiheitsgrade, und zwar um die zur Längsachse senkrechten Raumachsen, ebenso wie die translatorischen Freiheitsgrade in Richtung der Längsachse nicht unwesentlich eingeschränkt. An den Berührungsflächen der genannten Zähne der Lagerhülse sowie der Druckscheibe ist eine hohe Flächenpressung unvermeidlich. Infolge von Reibkorrosion besteht die Gefahr von Zerstörungen der Zähne, wobei diese Gefahr mit größer werdenden Drehzahlen anwächst. Die freie Bewegbarkeit bzw. schwimmende Anordnung der Hülse ist nicht in zufriedenstellender Weise realisiert. Die Hülse enthält ferner in der Mitte zwei kleine Bohrungen für das Schmiermittel und weist im übrigen eine vergleichsweise große Masse auf. Der vorbekannte Abgasturbolader ist für Drehzahlen bis ca. 80.000 Umdrehungen pro Minute ausgelegt.

Ferner sind in dem deutschen Fachbuch "Bauelemente der Feinmechanik", O. Richter und R. v. Voss, Verlag Technik Berlin, 1952, Seiten 224 bis 225 Drahtklammern oder Sicherungsringe beschrieben, welche in Längsnuten einer Welle angeordnet werden und zur Axialsicherung eines auf der Welle angeordneten Bauteiles dienen. Der Sicherungsring steht über die Umfangsfläche der Welle vor und das Bauteil kann mit einer zugeordneten axialen Stirnfläche an dem vorstehenden Teil des Federelementes zur Anlage kommen. Eine Verbindung zwischen dem Bauteil und der Welle wird mittels des Sicherungsringes nicht erreicht.

Weitere Schwierigkeiten ergeben sich bei derartigen schnell drehenden Abgasturboladern, durch einen als "oil whip" bezeichneten Effekt, welcher in Drehzahlbereichen größer als der zweifache Wert der ersten oder zweiten kritischen Drehzahl auftreten kann. Dieser Effekt bewirkt eine Anregung der Welle in dem Sinne, daß die Wellenenden eine der Wellenrotation überlagerte zweite Drehbewegung um die geometrische Achse durchführen. Der zwischen Lagerflächen von Lagerbuchsen befindliche Teil der Welle wird in die entgegengesetzte Richtung ausgelenkt, und man spricht daher vom sogenannten Seilschlageffekt. Wenn die überlagerte Drehbewegung mit der halben Wellendrehzahl erfolgt, kann ein metallischer Kontakt zwischen der Welle und der Lagerbuchse eintreten, woraus der vollständige Verlust der Lagertragfähigkeit und die Zerstörung der Lagerung resultieren können. Die auftretende Verformung der Welle kann zu einer unzulässigen Kantenpressung an den Enden der Lagerbuchsen führen. Schwimmende Lagerbuchsen, können jeweils unabhängig voneinander leichte Radial- und Kippbewegungen ausführen. Bei kleinen Abgasturboladern, die mit sehr hohen Drehzahlen rotieren sollen, und zwar über 150.000 Umdrehungen pro Minute, genügen die genannten Maßnahmen jedoch nicht, um eine funktionssichere Lagerung zu ermöglichen. Derartige Abgasturbolader weisen recht kleine rotierende Massen bei minimalem Wellendurchmesser auf, wobei die aufgrund der Wellenverformung bedingte Unwuchtbelastung bis zu dem hundertfachen Wert der Masse des Rotors betragen kann. Eine derartige Wellendurchbiegung bzw. der dann eintretende Seilschlageffekt kann unzulässig groß werden, wodurch nicht nur die oben genannten mechanischen Schäden eintreten, sondern auch eine starke Geräuschentwicklung eintreten kann.

Gemäß der deutschen Patentanmeldung P 36 01 082, welche am 23. Juli 1987, also nach dem Prioritätstag der vorliegenden Sache veröffentlicht wurde, erfolgt die Drehsicherung der Hülse mittels eines Sicherungsstiftes, dessen Spitze auf der Außenfläche eines der schmalen Stege aufliegt. Aufgrund konstruktiver Gegebenheiten können sich Schwierigkeiten hinsichtlich der Anordnung des Sicherungsstiftes ergeben.

Der Erfindung liegt daher die Aufgabe zugrunde, die Abgasturbolader-Lagerung dahingehend weiterzubilden, daß anstelle des Sicherungsstiftes andere Mittel zur Drehsicherung der Hülse zum Einsatz gelangen können. Die Hülse soll im Hinblick auf das Schwingungsverhalten eine geringe Masse aufweisen und ferner soll ein geräuscharmer Lauf gewährleistet werden. Ferner soll die Drehsicherung eine elastische Nachgiebigkeit, vor allem in Drehrichtung aufweisen und eine Dämpfung ermöglichen. Der Abgasturbolader soll mit einer extrem dünnen bzw. biegeweichen Welle ausgestattet werden können und Reibungsverluste sollen gering gehalten werden. Auch bei kleinen rotierenden Massen, und zwar insbesondere des Turbinenrades, der dünnen Welle sowie des Verdichterrades, soll eine stabile Rotordynamik und ferner ein geräuscharmer Lauf gewährleistet werden.

Zur Lösung dieser Aufgabe wird vorgeschlagen, daß zur Drehsicherung der Hülse ein Federelement vorgesehen ist, das mit einem Ende in eine Nut der Hülse eingreift, daß das Federelement ringförmig und in Umfangsrichtung elastisch ausgebildet ist und daß das Lagergehäuse eine in radialer Richtung zur Welle öffnende Ausnehmung aufweist, in welche das andere Ende des Federelementes eingreift.

Die erfindungsgemäße Lagerung eines Abgasturboladers zeichnet sich bei einfacher Konstruktion durch eine hohe Funktionssicherheit aus, wobei auch bei hohen Drehzahlen größer als 150.000 Umdrehungen pro Minute Lagerschäden oder störende Geräusche zuverlässig vermieden werden können. Die Welle kann im Hinblick auf geringe Lagerreibungsverluste einen äußerst geringen Durchmesser aufweisen, und es wird ein stabiler Betrieb ohne die oben aufgezeigten Nachteile erreicht. Das zur Drehsicherung der Hülse vorgesehene Federelement ist elastisch verformbar, wodurch in zuverlässiger Weise eine Werkstoffzerstörung an der Kontaktfläche der Lagerhülse vermieden wird. Diese Maßnahme ist wesentlich im Hinblick auf Schwingungen des hydrodynamisch gelagerten Rotors bei den zu erreichenden hohen Drehzahlen. Unwucht und selbsterregte Schwingungen führen nämlich bei fest in das Lagergehäuse eingesetzten Sicherungsmitteln an den Kontaktflächen des Sicherungselementes und der Lagerbuchse zu Reibkorrosion, die auch als "Fretting" bezeichnet wird. Mittels des elastisch verformbaren Sicherungselements wird eine solche Werkstoffzerstörung zuverlässig vermieden. Das Federelement ist ringförmig ausgebildet und in Umfangsrichtung federelastisch. Zweckmäßig erstreckt sich das ringförmige Federelement praktisch über den gesamten Umfang, also über einen möglichst großen Winkelbereich, so daß ein großer Federweg zur Verfügung steht. Das Federelement ist einerseits mit der Hülse und andererseits mit dem Lagergehäuse in der Weise gekoppelt, daß praktisch ausschließlich die elastische Ankopplung in Umfangsrichtung erfolgt und im übrigen die freie Bewegbarkeit in den anderen Freiheitsgraden gegeben ist. Ferner erfolgt durch das federnde Sicherungselement eine nicht unwesentliche Reduzierung der Schwingungsamplituden und unzulässig hohe Werte werden vermieden. Das Federelement ist zweckmäßig als ein zweifach gekröpfter Sicherungsring aus Federstahldraht ausgebildet, dessen radial nach außen gekröpftes Ende in die Ausnehmung des Lagergehäuses und dessen in axialer Richtung abgekröpftes anderes Ende in die Nut der Hülse eingreift. Das in der Bohrung des Lagergehäuses erfindungsgemäß angeordnete Federelement, und zwar insbesondere in einer Ringnut des Lagergehäuses, bewirkt infolge der Anlage am Lagergehäuse zuverlässig eine Dämpfung infolge Reibung. Das Federelement bzw. der Sicherungsring dient im Rahmen der Erfindung zur Verdrehsicherung.

Die vergleichsweise geringe achsparallele Länge der inneren Lagerfläche trägt zur Reduzierung der Reibung bei, während die im Vergleich hierzu erfindungsgemäß größere Länge der äußeren Lagerfläche einen größeren Quetschölfilm ergibt, wodurch in zuverlässiger Weise eine gute Dämpfung bewirkt wird. Die Verbindung der beiden Lagerbuchsen mittels schmalen Stegen und die zwischen denselben befindlichen Durchbrechungen gewährleisten einen ungestörten Abfluß des Schmiermittels bzw. Öles. Die erfindungsgemäß schmalen Stege und die wesentlich größeren Durchbrechungen ergeben eine wesentliche Reduzierung der Masse und vermeiden ein Stauen von Schmiermittel, das aus den Lagerspalten zur Mitte hin austritt; ein nachteiliges Abbremsen infolge von sich stauendem Schmiermittel wird vermieden. Die Hülse bzw. die beiden Lagerbuchsen dienen nicht zur Aufnahme von axialen Belastungen und sind somit ausschließlich als Radiallager wirksam; anderenfalls würde die Aufnahme von Axialkräften die freie Bewegbarkeit bzw. das Schwimmen der Hülse verhindern würde. Zusätzlich ist für die Welle ein hier nicht weiter zu erläuterndes Axiallager vorgesehen.. Das erfindungsgemäß vorgesehene Federelement dient ausschließlich zur Festlegung der Hülse in Drehrichtung der Welle. Es wird erfindungsgemäß nur der eine rotatorische Freiheitsgrad durch das Federelement aufgehoben, während die übrigen Freiheitsgrade, entsprechend dem vorgegebenen Spiel, der schwimmend angeordneten Hülse nicht eingeschränkt sind. Das Federelement bewirkt keine Einschränkung der axialen Bewegbarkeit der Hülse.

Eine besondere Ausgestaltung ist dadurch gekennzeichnet, daß die achsparallele Länge der inneren Lagerfläche sich zu der der äußeren Mantelfläche wie 0,25 bis 0,5 zu 1 verhält.

Hierdurch ist eine optimale Dimensionierung derart erreicht, daß einerseits eine äußerst geringe Lagerreibung im Bereich der inneren Lagerfläche stattfindet und andererseits aufgrund der vergleichsweise großen Mantelfläche eine ausgezeichnete Stabilität aufgrund der guten Quetschöldämpfung gewährleistet wird.

Eine weitere wichtige Ausführungsform ist dadurch gekennzeichnet, daß die achsparallele Länge jeder der inneren Lagerflächen der beiden Lagerbuchsen sich zum Innendurchmesser der Buchsen wie 0,3 bis 0,5 zu 1 verhält. Durch diese gerade im Hinblick auf die extrem dünnen Wellendurchmesser wichtige Auslegung werden Lagerreibungsverluste minimiert.

In einer besonderen Ausgestaltung wird die Hülse an dem einen Ende mit dem oben erläuterten Federelement bzw. Sicherungsring oder anderen Ende mit einem herkömmlichen Sicherungsring, also ohne Mittel zur Drehsicherung, gegen axiale Verschiebung gesichert. Eine einfache und kostengünstige Fertigung und ferner die freie Beweglichkeit der Hülse wird gewährleistet. Im Rahmen dieser Erfindung wird der Axialschub ausschließlich von einem separaten Axiallager aufgenommen.

In einer weiteren Ausführungsform ist die Hülse derart in dem Lagergehäuse angeordnet, daß die Stege im wesentlichen in einer horizontalen Ebene liegen und die Durchbrüche vertikal nach unten bzw. oben gerichtet sind. Die Stege sind erfindungsgemäß relativ schmal ausgebildet und seitlich der Welle angeordnet. Ein ordnungsgemäßer freier Ölabfluß ist durch die nach unten gerichtete Durchbrechung gewährleistet. Aufgrund der symmetrischen Ausbildung der Hülse mit zwei seitlichen Stegen können Montagefehler ausgeschlossen .werden. Bei der erfindungsgemäßen Hülse ist die axiale Länge der Stege im wesentlichen gleich groß wie die axiale Länge der Mantelfläche der jeweiligen Lagerbuchse.

Die Erfindung wird nachfolgend an Hand des in der Zeichnung dargestellten Ausführungsbeispieles näher erläutert. Es zeigen:

Fig. 1 einen axialen Längsschnitt durch einen Abgasturbolader,
Fig. 2 vergrößert einen Schnitt entlang Schnittlinie A gemäß Fig. 1,
Fig. 3 einen Schnitt entlang Schnittlinie B gemäß Fig. 2,
Fig. 4, 5 Ansichten des Federelementes in axialer bzw. radialer Richtung.

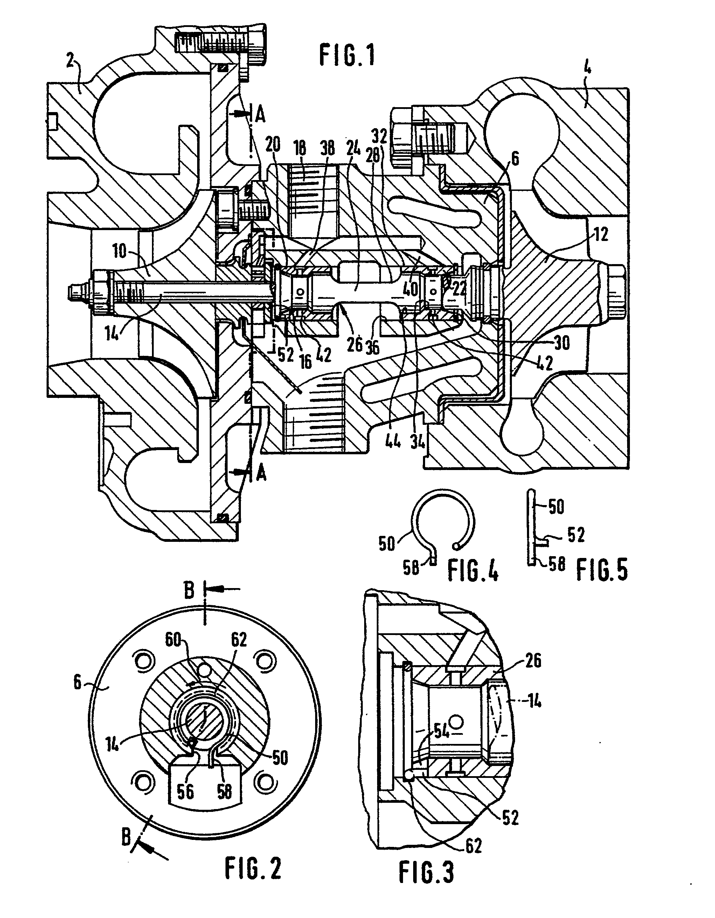

In Fig. 1 ist links das Verdichtergehäuse 2 und rechts das Turbinengehäuse 4 dargestellt, die in bekannter Weise über ein Lagergehäuse 6 miteinander verbunden sind. Das Verdichterrad 10 ist ebenso wie das Turbinenrad 12 auf einer Welle 14 drehfest angeordnet. Zur axialen Lagerung im Lagergehäuse 6 dient ein Axiallager 16. Durch eine Bohrung 18 wird Drucköl, insbesondere vom Motor, dem Lagergehäuse 6 zugeführt, um in gewohnter Weise zur Schmierung und Kühlung der Lager zu dienen.

Die Welle 14 weist einen relativ kleinen Durchmesser auf und ist in einer Innenbohrung des Lagergehäuses 6 mittels zwei axial beabstandeten Lagerbuchsen 20, 22 radial gelagert. Die beiden Lagerbuchsen 20, 22 sind mittels zwei axial verlaufenden schmalen Stegen 24 miteinander zu einer Hülse 26 integriert. In der Zeichnung ist hier nur der eine Steg 24, der hinter der Zeichenebene liegt, zu erkennen. Ein weiterer Steg ist entsprechend vor der Zeichenebene vorgesehen. Die Hülse 26 weist somit zwischen den beiden Stegen 24 jeweils eine Durchbrechung 28 auf. Die beiden Stege 24 sind im wesentlichen in einer Radialebene jeweils seitlich der Welle 14 angeordnet, und durch die vertikal unterhalb befindliche Durchbrechung 28 kann das Schmiermittel ungehindert abfließen; ein Stauen von Öl im mittleren Bereich der Hülse und daraus resultierende Verluste werden vermieden. Erfindungsgemäß weisen ferner die beiden Stege 24 in axialer Richtung näherungsweise die gleiche Länge auf wie die nachfolgend noch zu erläuternden äußeren Lagerflächen 32 der beiden Lagerbuchsen 20, 22. Die Hülse 26 wird mittels eines Federelementes 50 und eines Sicherungsringes 30 axial gesichert. Wesentlich ist, daß die axiale Lagerung ausschließlich mittels des Axiallagers 16 erfolgt, wobei die Hülse 26 zwischen dem Federelement und dem Sicherungsring 30 mit Spiel in dem Lagergehäuse 6 angeordnet ist. Das Federelement 50 weist ein erstes, in axialer Richtung abgekröpftes Ende 52 auf, welches in eine Nut 54 der Hülse 26 eingreift. Das Federelement 50 ist mit seinem anderen Ende in nachfolgend noch zu erläutender Weise in dem Lagergehäuse 6 verankert und übernimmt die Drehsicherung der Hülse 26. Aufgrund der elastischen Nachgiebigkeit des ringförmigen Federelementes 50 werden Beschädigungen oder gar Zerstörungen an der Kontaktfläche der Nut 56 der Hülse 26 zuverlässig vermieden. Das Federelement 50 ist in Umfangsrichtung federelastisch und erstreckt sich zweckmäßig nahezu über den Winkel von 360° bezüglich der Dreh- oder Längsachse, wodurch ein großer Federweg erreicht wird.

Wie ferner ersichtlich, weist die äußere Lagerfläche 32 axial eine größere Länge auf als die innere Lagerfläche 34. Zwischen der Innenfläche 36 der Bohrung des Lagergehäuses 6 und der Lagerfläche 32 ist somit ein Quetschölspalt vorhanden, der eine wesentlich größere Fläche und axiale Länge aufweist, als die innere Lagerfläche 34. Es bildet sich erfindungsgemäß ein großer Quetschölfilm aus, und eine funktionssichere Dämpfung aufgrund dieses Quetschölspaltes wird erreicht. Im Rahmen dieser Erfindung führt zu dem Quetschölspalt jeder Lagerstelle jeweils eine Bohrung 38, 40, durch welche das Drucköl zugeführt wird. Die beiden Lagerbuchsen weisen jeweils zwei äußere Umfangsnuten mit vier über den Umfang gleichmäßig verteilten Radialbohrungen 42 auf, durch welche das Drucköl zu den inneren Lagerflächen 34 gelangt. Erfindungsgemäß schließen sich zur Mitte hin axial an die innere Lagerfläche 34 Erweiterungen 44 mit vergrößertem Durchmesser an. Diese Erweiterungen 44 gehen dann kontinuierlich in die Stege 24 über, die ebenfalls einen entsprechenden radialen Abstand zur Welle 14 aufweisen; die beiden Erweiterungen 44 weisen eine axiale Erstreckung in der Größenordnung der Lagerflächen auf. Die innere Lagerfläche 34 ist somit wesentlich kleiner als die äußere Mantelfläche 32, und die Reibungsverluste können folglich klein gehalten werden.

Fig. 2 zeigt einen Schnitt entlang Schnittlinie A, wobei der Anschlußflansch des Lagergehäuses 6 und die Welle 14 gut zu erkennen sind. Das Lagergehäuse 6 weist eine zur Welle 14 sich öffnende Ausnehmung 56 auf, in welche das ringförmige Federungselement 50 mit seinem anderen, radial nach außen abgekröpften Ende 58 eingreift. Der Pfeil 60 bezeichnet die Drehrichtung der Welle 14. Das erfindungsgemäß als offener Ring aus Federstahldraht gebildete Federelement 50 gewährleistet eine elastische Nachgiebigkeit in Drehrichtung. Durch die ringförmige Ausgestaltung des Federelementes 50 wird auch und gerade bei kleinen Wellendurchmessern die benötigte Federweglänge erreicht. Das Federelement 50 ist im Rahmen dieser Erfindung in einer ringförmigen Nut 62 des Lagergehäuses 6 angeordnet. Mittels dieser Nut 62 wird nicht nur die Fixierung des Federelementes 50 erreicht, sondern erfindungsgemäß erfolgt eine Dämpfung infolge Reibung des Federelementes 50 in dieser Nut 62. Es sei festgehalten, daß der am anderen Ende der Hülse 26 ebenfalls in einer Ringnut vorgesehene Sicherungsring ausschließlich zur axialen Festlegung dient und praktisch keine Relativbewegung bezüglich des Lagergehäuses ausführt. Demgegenüber ermöglicht das Federelement 50, welches einerseits mit dem Ende 52 in die Hülse 26 und andererseits mit dem Ende 58 in das Lagergehäuse 6 eingreift, eine elastische Bewegbarkeit derart, daß infolge von Reibung eine Dämpfung von Schwingungen erzielt wird. Aufgrund der federelastischen Ausbildung des Elementes 50 kann beispielsweise bei einer Drehzahlerhöhung der Abstand zwischen den Enden 56 und 58 sich verringern, wodurch sich Relativbewegungen des Federelementes 50 in der Nut 62 ergeben, welche Bewegungen in überraschend einfacher Weise eine Reibungsdämpfung zur Folge haben.

Fig. 3 zeigt teilweise einen Schnitt entlang Schnittlinie B; dieser Schnitt entspricht einer Vergrößerung des entsprechenden Ausschnittes aus Fig. 1. Das Federelement 50 ist in der Ringnut 62 fixiert und greift mit dem ersten Ende 52 in die bereits erläuterte Nut 54 der Hülse 26. Das zweite abgekröpfte Ende des Federelementes 50 befindet sich außerhalb der Zeichenebene und ist hier der Übersichtlichkeit wegen nicht dargestellt.

Das Federelement 50 ist in Fig. 4 in einer axialen Ansicht und ferner in Fig. 5 in einer radialen Ansicht dargestellt. In Fig. 4 ist das radial nach außen abgekröpfte zweite Ende 58 gut zu erkennen. In Fig. 5 sind sowohl das erste axial abgekröpfte Ende 52 als auch das zweite Ende 58 des Federelementes 50 dargestellt.

Bezugszeichenliste

2 Verdichtergehäuse
4 Turbinengehäuse
6 Lagergehäuse
10 Verdichterrad
12 Turbinenrad
14 Welle
16 Axiallager
18 Bohrung
20, 22 Lagerbuchse
24 Steg
26 Hülse
28 Durchbrechung
30 Sicherungsring
32 äußere Lagerfläche
34 innere Lagerfläche
36 Innenbohrung
38, 40 Bohrung
42 Zulaufbohrung
44 Erweiterung
50 Federelement

52 erstes Ende von 50
54 Nut von 26
56 Ausnehmung
58 zweites Ende von 50
60 Pfeil
62 Nut

**Patentansprüche**

1. Lagerung eines Abgasturboladers mit einer Hülse (26), die in einer Bohrung (36) eines Lagergehäuses (6) zur radialen Lagerung einer Welle (14) schwimmend angeordnet und mittels im Lagergehäuse angeordneten Mitteln gegen Drehung gesichert ist, wobei die Hülse (26) an ihren beiden axialen Endbereichen jeweils eine innere und eine äußere Lagerfläche (34, 32) und ferner axial zwischen den Endbereichen wenigstens zwei Durchbrechungen (28) aufweist, dadurch gekennzeichnet, daß zur Drehsicherung der Hülse (26) ein Federelement (50) vorgesehen ist, welches mit einem ersten Ende (52) in eine Nut (54) der Hülse (26) eingreift, daß das Federelement (50) ringförmig und in Umfangsrichtung elastisch ausgebildet ist, und daß das Lagergehäuse (6) eine bevorzugt in radialer Richtung zur Welle (14) sich öffnende Ausnehmung (56) aufweist, in welche das andere Ende (58) des Federelementes (50) eingreift.

2. Lagerung eines Abgasturboladers nach Anspruch 1, dadurch gekennzeichnet, daß das Federelement (50) in einer ringförmigen Nut (62) des Lagergehäuses (6) angeordnet ist.

3. Lagerung eines Abgasturboladers nach Anspruch 1 oder 2, dadurch gekennzeichnet, daß die Nut (54) der Hülse (26) im wesentlichen in axialer Richtung angeordnet ist.

4. Lagerung eines Abgasturboladers nach einem der Ansprüche 1 bis 3, dadurch gekennzeichnet, daß das ringförmige Federelement (50) an den Enden (52, 58) in axialer und/oder radialer Richtung abgekröpft sind.

5. Lagerung eines Abgasturboladers nach einem der Ansprüche 1 bis 4, dadurch gekennzeichnet, daß das Federelement (50) sich über einen Winkelbereich von näherungsweise 360° um die Längsachse erstreckt.

6. Lagerung eines Abgasturboladers nach einem der Ansprüche 1 bis 5, dadurch gekennzeichnet, daß das Federelement (50) der einen axialen Stirnfläche der Hülse (26) zugeordnet ist und daß am anderen axialen Ende ein Sicherungselement (30) vorgesehen ist, wobei die Hülse (26) mit axialem Spiel zwischen dem Federelement (50) und dem Sicherungselement (30) axial frei bewegbar ist.

7. Lagerung eines Abgasturboladers nach einem der Ansprüche 1 bis 6, dadurch gekennzeichnet, daß die achsparallele Länge der inneren Lagerfläche (34) der Lagerbuchsen (20, 22) sich zur äußeren Lagerfläche (32) wie 0,25 bis 0,5 zu 1 verhält.

8. Lagerung eines Abgasturboladers nach einem der Ansprüche 1 bis 7, dadurch gekennzeichnet, daß die achsparallele Länge jeder inneren Lagerfläche (34) sich zum Innendurchmesser der Lagerbuchsen (20, 22) wie 0,3 bis 0,5 zu 1 verhält.

9. Lagerung eines Abgasturboladers nach einem der Ansprüche 1 bis 8, dadurch gekennzeichnet, daß in Umfangsrichtung zwischen den Durchbrechungen (28) Stege (24) vorgesehen sind, die sich jeweils über einen wesentlich kleineren Umfangsbereich erstrecken als die Durchbrechungen (28).

10. Lagerung eines Abgasturboladers nach einem der Ansprüche 1 bis 9, dadurch gekennzeichnet, daß die Stege (24) in axialer Richtung im wesentlichen gleich lang ausgebildet sind wie die äußeren Lagerflächen (32).

11. Lagerung eines Abgasturboladers nach einem der Ansprüche 1 bis 10, dadurch gekennzeichnet, daß an die innere Lagerfläche (34) jeweils zur Mitte zu den Stegen (24), die in Umfangsrichtung zwischen den Durchbrechungen (28) vorgesehen sind, sich eine Erweiterung (44) anschließt, die bevorzugt im wesentlichen die gleiche axiale Länge wie die Lagerfläche (34) aufweist.

12. Lagerung eines Abgasturboladers nach einem der Ansprüche 1 bis 11, dadurch gekennzeichnet, daß jede Lagerbuchse (20, 22) eine getrennte Schmiermittelzuführung, insbesondere eine Bohrung (38, 40), im Lagergehäuse (6) aufweist und daß jede Lagerbuchse (20, 22) eine Umfangsnut zur Schmiermittelzufuhr aufweist, wobei insbesondere vier radiale Zulaufbohrungen (42) das Schmiermittel zur inneren Lagerfläche (34) führen.

13. Lagerung eines Abgasturboladers nach einem der Ansprüche 1 bis 12, dadurch gekennzeichnet, daß die Hülse (26) derart in dem Lagergehäuse (6) angeordnet ist, daß die Stege (24), die in Umfangsrichtungs zwischen den Durchbrechungen (28) vorgesehen sind, seitlich der Welle (14) im wesentlichen in einer horizontalen Ebene liegen, wobei die Durchbrechungen (28) vertikal unten bzw. oben angeordnet sind.

## Claims

1. Bearing for an exhaust-gas turbocharger comprising a sleeve (26) which is arranged in floating manner in a bore (36) of a bearing housing (6) for the radial mounting of a shaft (14) and secured against rotation by means mounted in the bearing housing, the sleeve (26) having at each of its two axial end portions an inner and an outer bearing surface (34 , 32) and also having at least two openings (28) provided axially between the end portions, characterised in that a spring element (50) is provided for preventing rotation of the sleeve (26), said spring element (50) having a first end (52) which engages in a groove (54) in the sleeve (26), the spring element (50) is annular and resilient in the circumferential direction, and the bearing housing (6) has a recess (56) which preferably opens out in the radial direction with respect to the shaft (14), the other end (58) of the spring element (50) engaging in said recess (56).

2. Bearing for an exhaust-gas turbocharger according to claim 1, characterised in that the spring element (50) is arranged in an annular groove (62) in the bearing housing (6).

3. Bearing for an exhaust-gas turbocharger according to claim 1 or 2, characterised in that the groove (54) of the sleeve (26) is arranged substantially in the axial direction.

4. Bearing for an exhaust-gas turbocharger according to one of claims 1 to 3, characterised in that the annular spring element (50) is bent round in the axial and/or radial direction at its ends (52, 58).

5. Bearing for an exhaust-gas turbocharger according to one of claims 1 to 4, characterised in that the spring element (50) extends over an angular range of approximately 360° about the longitudinal axis.

6. Bearing for an exhaust-gas turbocharger according to one of claims 1 to 5, characterised in that the spring element (50) is associated with one axial end face of the sleeve (26) and that the other axial end a retaining element (30) is provided, the sleeve (26) being freely moveable in the axial direction, with axial play, between the spring element (50) and the retaining element (30).

7. Bearing for an exhaust-gas turbocharger according to one of claims 1 to 6, characterised in that the ratio of the axis-parallel length of the inner bearing surface (34) of the bearing bushings (20, 22) to the outer bearing surface (32) is from 0.25 to 0.5:1.

8. Bearing for an exhaust-gas turbocharger as claimed in one of claims 1 to 7, characterised in that the ratio of the axis-parallel length of each inner bearing surface (34) to the internal diameter of the bearing bushings (20, 22) is from 0.3 to 0.5:1.

9. Bearing for an exhaust-gas turbocharger according to one of claims 1 to 8, characterised in that, in the circumferential direction between the openings (28), webs (24) are provided each of which extends over a substantially smaller circumferential region than the openings (28).

10. Bearing for an exhaust-gas turbocharger according to one of claims 1 to 9, characterised in that the webs (24) are of substantially equal length in the axial direction as the outer bearing surfaces (32).

11. Bearing for an exhaust-gas turbocharger according to one of claims 1 to 10, characterised in that, adjoining the inner bearing surface (34) towards the centre of the webs (24), provided between the openings (28) in the circumferential direction, there is a widened portion (44) which is preferably of substantially the same axial length as the bearing surface (34).

12. Bearing for an exhaust-gas turbocharger according to one of claims 1 to 11, characterised in that each bearing bushing (20, 22) has a separate lubricant supply means, more particularly a bore (38, 40), in the bearing housing (6) and each bearing bushing (20, 22) has a circumferential groove for the supply of lubricant, whilst in particular four radial feed bores (42) supply the lubricant to the inner bearing surface (34).

13. Bearing for an exhaust-gas turbocharger according to one of claims 1 to 12, characterised in that the sleeve (26) is arranged in the bearing housing (6) in such a way that the webs (24), which are provided between the openings (28) in the circumferential direction, are disposed laterally of the shaft (14) substantially in a horizontal plane, the openings (28) being arranged vertically below and above.

**Revendications**

1. Palier de turbo-compresseur sur gaz d'échappement comprenant une douille (26) qui est montée flottante dans un alésage (36) d'un carter de palier (6) pour former le palier radial d'un, arbre (14) et qui est arrêtée en rotation à l'aide de moyens disposés dans le carter de palier; dans lequel la douille (26) présente dans chacune de ses deux régions terminales axiales des surfaces de portée intérieure et extérieure (34, 32); et dans lequel il est prévu au moins deux ouvertures (28) situées entre les régions terminales dans la direction axiale, caractérisé en ce qu'il est prévu, pour arrêter la douille (26) en rotation, un élément élastique (50) qui est engagé par une première extrémité (52) dans une rainure (54) de la douille (26); en ce que l'élément élastique (50) est de configuration annulaire et est élastique dans la direction circonférentielle; et en ce que le carter de palier (6) présente un évidement (56) qui s'ouvre dans la direction radiale par rapport à l'arbre (14) et dans lequel s'engage l'autre extrémité (58) de l'élément élastique (50).

2. Palier de turbo-compresseur sur gaz d'échappement selon la Revendication 1, caractérisé en ce que l'élément élastique (50) est, disposé dans une gorge annulaire (62) du carter de palier (6).

3. Palier de turbo-compresseur sur gaz d'échappement selon la Revendication 1 ou 2, caractérisé en ce que la rainure (54) de la douille (26) est disposée sensiblement dans la direction axiale.

4. Palier de turbo-compresseur sur gaz d'échappement selon l'une des Revendications 1 à 3, caractérisé en ce que l'élément élastique annulaire (50) est coudé dans la direction axiale et/ou dans la direction radiale à ses extrémités (52, 58).

5. Palier de turbo-compresseur sur gaz d'échappement selon l'une des Revendications 1 à 4, caractérisé en ce que l'élément élastique (50) s'étend autour de l'axe longitudinal, sur un angle d'environ 360°.

6. Palier de turbo-compresseur sur gaz d'échappement selon l'une des Revendications 1 à 5, caractérisé en ce que l'élément élastique (50) est associé à l'une des surfaces frontales axiales de la douille (26) et en ce qu'à l'autre extrémité axiale, est prévu un élément d'arrêt (30), la douille (26) étant librement mobile avec jeu axial entre l'élément élastique (50) et l'élément d'arrêt (30).

7. Palier de turbo-compresseur sur gaz d'échappement selon l'une des Revendications 1 à 6, caractérisé en ce que la longueur de la surface de portée intérieure (34) des coussinets (20, 22), mesurée dans la direction parallèle à l'axe, est dans un rapport de 0,25 à 0,5/1 avec celle de la surface de portée extérieure (32).

8. Palier de turbo-compresseur sur gaz d'échappement selon l'une des Revendications 1 à 7, caractérisé en ce que la longueur de chaque surface de portée intérieure (34) mesurée dans la direction parallèle à l'axe, est dans un rapport de 0,3 à 0,5/1 avec le diamètre intérieur des coussinets (20, 22).

9. Palier de turbo-compresseur sur gaz d'échappement selon l'une des Revendications 1 à 8, caractérisé en ce que, entre les ouvertures (28), considéré dans la direction circonférentielle, sont prévues des entretoises (24) qui s'étendent chacune sur une dimension circonférentielle sensiblement inférieure à celle des ouvertures (28).

10. Palier de turbo-compresseur sur gaz d'échappement selon l'une des Revendications 1 à 9, caractérisé en ce que les entretoises (24) sont sensiblement de même longueur axiale que les surfaces de portée extérieure (32).

11. Palier de turbo-compresseur sur gaz d'échappement selon l'une des Revendications 1 à 10, caractérisé en ce qu'à la surface de chaque portée intérieure (34), fait suite, en se dirigeant vers le milieu et vers les entretoises (24), qui sont prévues entre les ouvertures (28) dans la direction circonférentielle, une partie élargie (44) qui possède de préférence sensiblement la même longueur axiale que la surface de portée (34).

12. Palier de turbo-compresseur sur gaz d'échappement selon l'une des Revendications 1 à 11, caractérisé en ce que chaque coussinet (20, 22) présente une arrivée de lubrifiant séparée, notamment un perçage (38, 40) prévu dans le carter de palier (6), et en ce que chaques coussinet (20, 22) présente une gorge circonférentielle pour l'amenée du lubrifiant, tandis que des perçages d'arrivée radiaux (42), notamment au nombre de quatre, conduisent le lubrifiant à la surface de portée intérieure (34).

13. Palier de turbo-compresseur sur gaz d'échappement selon l'une des Revendications 1 à 12, caractérisé en ce que la douille (26, est agencée dans le carter de palier (6) de telle manière que les entretoises (24), qui sont prévues entre les perçages (28, dans la direction circonférentielle, se trouvent latéralement à l'arbre (14), sensiblement dans un plan horizontal, les ouvertures (28) étant disposées verticalement vers le haut et vers le bas respectivement.

FIG.1

FIG.2

FIG.3

FIG.4

FIG.5